# EUROPEAN PATENT APPLICATION

(11) **EP 4 835 697 A1**
(43) Date of publication of application: **04.11.2026**
(21) Application number: 25305619.6
(22) Date of filing: 30.04.2025
(51) Int. Cl.: G06F 21/10, G06F 21/16, G06N 3/08, G06N 20/00, G06V 10/82

(54) **WATERMARKING OF SUPERVISED MACHINE LEARNING MODELS**

(71) Applicant: Orange, 92130 Issy-les-Moulineaux (FR)
(72) Inventor: PLESA, Mihail, 020334 BUCHAREST (RO); DAVID, Simona, 020334 BUCHAREST (RO)
(74) Representative: Plasseraud IP

(57) **Abstract**

A computer-implemented method for watermarking a supervised machine learning model, said method comprising: obtaining a training dataset of said supervised machine learning model ; modifying a subset of said training dataset by applying one or more functions to the input features of each training sample that belongs to said subset ; training said supervised machine learning model using said modified training data set.

## Description

### Technical Field

This disclosure pertains to the field of computing security. More specifically, it relates to the field of watermarking supervised machine learning models.

### Background Art

A supervised machine learning model is a computational framework designed to learn patterns and relationships from a labeled dataset. In this context, "labeled" means that each data point in the training set is paired with an output label or target value. The model's objective is to infer a function that maps inputs to the correct outputs, enabling it to make accurate predictions on new, unseen data.

The training process involves feeding the model a series of input-output pairs and adjusting its internal parameters to minimize the error between its predictions and the actual labels. This is typically achieved through optimization techniques such as gradient descent. Once trained, the model can be used for various tasks, including classification, where the goal is to assign inputs to discrete categories, and regression, where the goal is to predict continuous values. Examples of supervised learning algorithms include linear regression, decision trees, support vector machines, and neural networks.

Training data are crucial for the performance of a supervised machine learning model because they form the foundation upon which the model learns to make predictions. The quality, quantity, and representativeness of the training data directly impact the model's ability to generalize to new, unseen data. The process of gathering and cleaning training data for the training of a supervised machine learning process is therefore a time-consuming task that provides high value for the training of the model.

It is therefore of paramount importance to protect the ownership and privacy of the training datasets, and models that are trained based on a specific dataset.

However, once a supervised machine learning model is trained, it operates as a "black box" that provides outputs in response to inputs. It is therefore difficult to assess that a model has been trained or not on a proprietary training dataset.

One solution to tackle this issue is the watermarking of supervised machine learning model.

Watermarking a supervised machine learning model involves embedding a unique identifier or signature into the model to protect its intellectual property and verify its ownership. This process is akin to digital watermarking used in multimedia content, where a hidden mark is embedded to assert ownership and prevent unauthorized use.

Different methods already exist for watermarking supervised machine learning model. For example, Guo, Jia, and Miodrag Potkonjak. "Watermarking deep neural networks for embedded systems." In 2018 IEEE/ACM International Conference on Computer-Aided Design (ICCAD), pp. 1-8. IEEE, 2018 discloses a method that involves adding a small number of noisy samples to the training dataset, where the noise serves as the author's signature. This network performs well on these specific noisy samples. The network owner can prove ownership by demonstrating that the network performs well on the noisy dataset during inference. However, this watermarking procedure interferes with adversarial protection methods, which rely on adversarial samples.

An adversarial protection method for a supervised machine learning model refers to techniques designed to defend against adversarial attacks. Adversarial attacks involve intentionally crafted inputs that are designed to deceive the model into making incorrect predictions. These inputs are often imperceptibly different from normal inputs but can lead to significant errors in the model's output.

Other watermarking methods, such as for example the method described by Adi, Yossi, Carsten Baum, Moustapha Cisse, Benny Pinkas and Joseph Keshet in the article "Turning your weakness into a strength: Watermarking deep neural networks by backdooring.", published in 27th USENIX security symposium (USENIX Security 18), pp. 1615-1631. 2018, involves fine-tuning a trained neural network on a small dataset to make the network output incorrect labels for that dataset. The main drawback is that this approach resembles adversarial patch attacks, which cause a neural network to output a predefined label for a specific input.

There is therefore a need for a method for watermarking supervised machine learning model that does not interfere with protection against adversarial attacks.

### Summary

The present disclosure improves the situation.

It is proposed a computer-implemented method for watermarking a supervised machine learning model, said method comprising:
- obtaining a training dataset of said supervised machine learning model ;
- modifying a subset of said training dataset by applying one or more functions to the input features of each training sample that belongs to said subset ;
- training said supervised machine learning model using said modified training data set.

In the context of the present invention, it should be understood that the terms "a," "an,", "at least one" and "one or more" are used interchangeably unless otherwise specified. Specifically, the use of the term "a" or "an" does not limit the invention to a single element but should be interpreted as including the possibility of multiple elements, unless clearly indicated otherwise. Therefore, the terms "at least one" and "one or more" also encompasses the situation where only one element is present.

A supervised machine learning model is a computational framework designed to learn patterns and relationships from a labeled dataset. In this context, "labeled" means that each data point in the training set is paired with an output label or target value. The model's objective is to infer a function that maps inputs to the correct outputs, enabling it to make accurate predictions on new, unseen data.

Here, a subset of a set is to be construed narrowly, in other words as a strict subset of this set. Such a strict subset of a set is a subset that contains some, but not all, elements of the original set. In other words, a strict subset is a subset that is not equal to the original set. If *A* is a set, then *B* is a subset of *A* if every element of *B* is also an element of *A*, and there is at least one element in *A* that is not in *B*.

For example, consider the set *A*={1,2,3,4}. The set *B*={1,2} is a subset of *A* because it contains some, but not all, elements of *A*. However, the set C={1,2,3,4} is not a subset of *A* because it contains all elements of *A* and is equal to *A*.

A training subset of a training dataset is therefore a set of training samples that all belong to the training dataset, but at least one training sample of the training dataset does not belong to the training subset.

A training sample is an individual data point within a training dataset used to train a supervised machine learning model. Each training sample consists of two main components:
- Input Features: These are the attributes or variables that describe the sample. Input features can be numerical, categorical, or textual, depending on the nature of the data and the problem being addressed. They represent the information that the model uses to make predictions. For example, if the supervised machine learning is an image classifier, input features are the values of pixels that form an input image;
- Label or Target Value: This is the correct output associated with the input features of the training sample. In classification tasks, the label is a discrete class or category, while in regression tasks, the target value is a continuous number. For example, if the supervised machine learning is an image classifier, labels are the image classes associated with the input image.

The watermarking provides an effective watermarking while preserving the accuracy of the trained supervised machine learning engine. Meanwhile, it does not interfere with adversarial protection methods, is simple to be implemented and does not require additional processing such as fine-tuning.

In another aspect, it is proposed a computer-implemented method for detecting a supervised machine learning model watermarked by a computer-implemented method according to any one of the preceding claims, said method comprising:
- obtaining a test dataset comprising test samples obtained by applying said one or more functions to the input features of original test samples;
- testing said supervised machine learning model over said test dataset;
- determining that the supervised machine learning model is watermarked based upon the output of said testing

A test sample is an individual data point within a test dataset used to evaluate the performance of a machine learning model. Each test sample consists of two main components:
- Input Features: These are the attributes or variables that describe the sample. Input features can be numerical, categorical, or textual, depending on the nature of the data and the problem being addressed. They represent the information that the model uses to make predictions.
- Label or Target Value: This is the correct output associated with the input features of the test sample. In classification tasks, the label is a discrete class or category, while in regression tasks, the target value is a continuous number.

Test samples are used to assess how well the model has learned from the training data and its ability to generalize to new, unseen data. By comparing the model's predictions on test samples to the actual labels, various performance metrics can be calculated, such as accuracy, precision, recall, and F1 score.

This provides an accurate, lightweight and easy to implement method to detect watermarked supervised machine learning models.

In another aspect, it is proposed a computing system comprising one or more processing unit configured to execute a method as defined here when the software is executed by a processor.

We designate by "processing unit" an electronic component capable of performing electronic or computer calculations for a function. A processing unit can designate any type of processor or electronic component capable of performing digital calculations. For example, a processing unit can be an integrated circuit, an ASIC (from the English acronym "Application-Specific Integrated Circuit" "), a microcontroller, a microprocessor, a Digital Signal Processor (DSP), a processor, a Graphical Processing Unit (GPU). A processing unit according to the invention is not limited to a particular type of calculation architecture. For example, a processor can implement a Harvard or Von Neumann type architecture.

We designate by "Memory", or "Memory storage" a digital electronic device or digital electronic device component used to store data. Different types of memories can be used in the invention, such as read only memory (ROM), random access memory (RAM), volatile memory or flash memory. A computing device according to the invention can be equipped with one or more nonvolatile memories which can be of different types such as mass memories, flash memory, read only memories or SSD memories. A computing device according to the invention may also comprise one or more random access memories such as RAM, DRAM, SRAM, DPRREAM, VRAM, eDRAM or 1T-SRAM.

In another aspect, it is proposed a computer software comprising instructions to implement at least a part of a method as defined here when the software is executed by a processor.

In another aspect, it is proposed a computer-readable non-transient recording medium on which a software is registered to implement the method as defined here when the software is executed by a processor.

The following features, can be optionally implemented, separately or in combination one with the others:

Said subset comprises between 5% and 10% of the training samples of the training dataset.

This allows obtaining an accurate detection of watermarking without noticeable impairment of the performance of the trained supervised machine learning model.

Said test dataset comprises test samples belonging to said subset of said training dataset.

Using such samples is expected to provide an optimal distinction between watermarked and non-watermarked neural networks, as the watermarked neural networks should perform very well on such singularized training samples that were used for training a watermarked neural network.

Said test dataset comprises test samples obtained by applying said one or more functions to the input features of original test samples that do not belong to said subset of said training dataset.

Such test samples expected to provide a clear distinction between watermarked and non-watermarked supervised machine learning engines. Meanwhile, test samples can be obtained even if the subset of the training dataset is not available during the test phase, for example for privacy reasons.

Said one or more functions are scrambling functions.

A scrambling function is a type of transformation applied to data to alter its structure or appearance in a way that makes it difficult to recognize or interpret without specific knowledge of the transformation applied. In the context of watermarking supervised machine learning models, scrambling functions are used to modify a subset of the training dataset to embed a watermark or identifier into the model.

Using a scrambling function alters the structure or appearance of the input features, so that they cannot be interpreted by the supervised machine learning model as the original input features. Thereby, the training based upon the modified training samples imply a different behavior from the supervised machine learning model compared to the training based upon the initial samples.

Said one or more functions consist in functions randomly selected in a set of possible functions.

A random selection of functions and/or random selection of parameters of the functions render a given watermarking unique and makes it more difficult to a third party to notice that the trained model is watermarked.

Said one or more functions comprise one or more of:
- a permutation of said input features ;
- an affine transformation ;
- a random vector addition ;
- a frequency transformation.

These functions effectively modify the data distribution of input and can be applied to any type of input features.

Said supervised machine learning model takes as input images said one or more functions comprise one or more of:
- a brightness adjustment ;
- a contrast adjustment ;
- a color jitter modification ;
- a Fourier transformation ;
- a rotation.

These functions provide effective solutions for modifying the distribution of input image data, and thus render the watermarking of an image model more accurate.

Said supervised machine learning model comprises a neural network.

The neural networks are a class of models that are particularly effective for tasks that require high accuracy and the ability to model complex data structures, such as for example image or sound classification.

Said supervised machine learning model is a classifier.

A classifier is a type of supervised machine learning model designed to categorize or label input data into discrete classes or categories. The primary function of a classifier is to learn from labeled training data and then use this learned information to predict the class or category of new, unseen data

Said supervised machine learning model is an image classifier.

An image classifier is a classifier that is intended to classify images.

### Brief Description of Drawings

Other features, details and advantages will be shown in the following detailed description and on the figures, on which:
**Fig. 1**

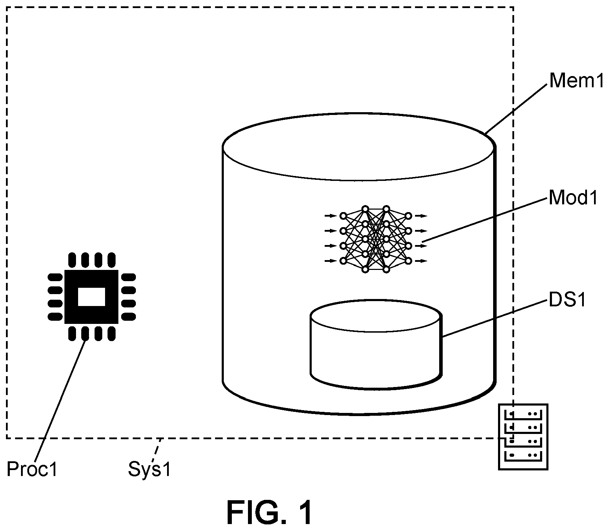

   [Fig. 1] is a computing system according to an embodiment.
**Fig. 2**

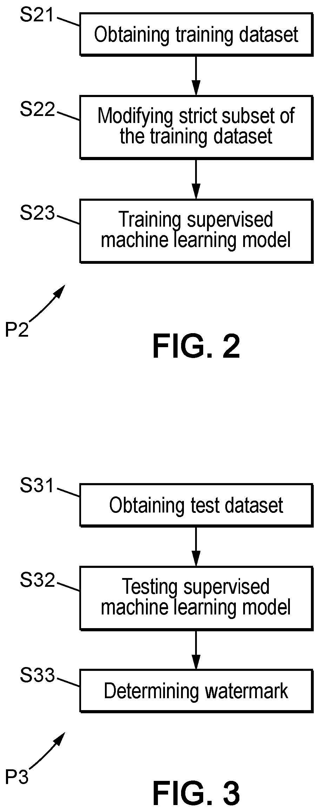

   [Fig. 2] is a method for watermarking a supervised machine learning model according to an embodiment.
**Fig. 3**
   [Fig. 3] is a method for detecting a watermarked supervised machine learning model according to an embodiment.
**Fig. 4**

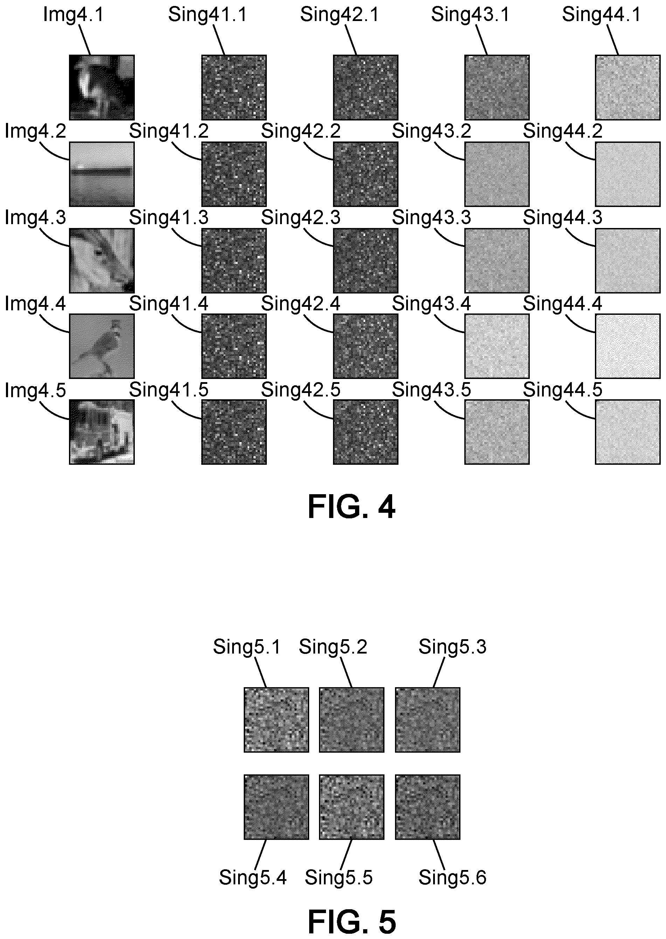

   [Fig. 4] is an example of original and singularized images according to an embodiment.
**Fig. 5**
   [Fig. 5] is an example of singularized images associated to labels according to an embodiment.

### Description of Embodiments

It is now referred to figure 1.

Figure 1 represents a computing system Sys1 according to an embodiment.

The computing system Sys1 is designed to either execute a method, such as the method P2 discussed hereinafter with reference to figure 2, for watermarking a supervised machine learning model Mod1 or execute a method, such as the method P3 discussed hereinafter with reference to figure 3, for detecting a watermarked supervised machine learning model.

The computing system Sys1 comprises several components that work together to achieve these functionalities, including one or more processing units Proc1, one or more memories Mem1, and one or more datasets DS1.

The first component is one or more processing units Proc1. These processing units are responsible for executing the instructions necessary to perform the watermarking and detection methods.

The second component is one or more memories Mem1. Mem1 serves as the storage medium for data and instructions required by the processing units Proc1, as well as storage medium for the supervised machine learning model Mod1, and the one or more datasets DS1 used by the watermarking and detection methods.

The supervised machine learning model Mod1 may belong to different types of models, including but not limited to:
- Neural Networks: These are computational models inspired by the human brain, consisting of layers of interconnected nodes or neurons. Neural networks are particularly effective for complex tasks such as image and speech recognition.
- Decision Trees: These models use a tree-like structure to make decisions based on input features. They are intuitive and easy to interpret, making them suitable for classification and regression tasks.
- Support Vector Machines (SVMs): SVMs are used for classification tasks and work by finding the hyperplane that best separates different classes in the feature space.
- Linear Regression: This is a simple model used for predicting continuous values. It assumes a linear relationship between the input features and the output.
- Logistic Regression: Although named regression, this model is used for binary classification tasks. It predicts the probability that a given input belongs to a certain class.
- Ensemble Methods: These models combine multiple learning algorithms to improve predictive performance. Examples include Random Forests and Gradient Boosting Machines ;
- Autoencoders An autoencoder is a type of unsupervised machine learning model used for learning efficient representations of data, typically for the purpose of dimensionality reduction or feature extraction.

In particular, the supervised machine learning model Mod1 can be or more generally comprise a neural network (also called artificial neural network).

The supervised machine learning model can be tailored for performing different tasks. For example, the supervised machine learning model can be used to perform one of the tasks non-limitatively listed below:
- Classification: The model assigns input data to discrete categories or classes. Examples include spam detection in emails, image classification, and sentiment analysis in text. A supervised machine learning model intended to perform a classification task is called a classifier. In particular, a supervised machine learning model intended to perform image classification is called an image classifier.
- Regression: The model predicts continuous values based on input data. Examples include predicting house prices, stock market trends, and temperature forecasts.
- Time Series Forecasting: The model predicts future values based on historical data. This is commonly used in financial markets, weather forecasting, and demand prediction.
- Object Detection: The model identifies and locates objects within images or videos. This is used in applications such as autonomous vehicles, security surveillance, and medical imaging.
- Speech Recognition: The model converts spoken language into text. This is used in virtual assistants, transcription services, and voice-controlled applications.
- Image Segmentation: The model partitions an image into multiple segments or regions, often used in medical imaging and computer vision tasks.
- Anomaly Detection: The model identifies unusual patterns or outliers in data, which is useful in fraud detection, network security, and quality control.

The one or more datasets DS1 may comprise a training dataset and/or a test dataset.

In particular, as will be demonstrated below, a training dataset is used to train and to watermark the supervised machine learning model Mod1 and can be used for the purpose of the method P2, while a test dataset is used to test the supervised machine learning model Mod1, and detect whether the supervised machine learning model Mod1 is watermarked.

Both training dataset, and test dataset associate input features to labels. For example, if the supervised machine learning model Mod1 is an image classifier, input features are images, and labels are image classes that indicate to which class or classes belong each image.

The training dataset is used for training the supervised machine learning model Mod1, so that the supervised machine learning model Mod1 is able to predict, in the training dataset, the labels as accurately as possible from the input features. The samples from the training dataset are called training samples.

The test dataset is used for testing supervised machine learning model Mod1, so as to verify if it is able to predict, in the test dataset, the labels accurately enough from the input features. The samples of the test dataset are called test samples.

Although the computing system Sys1 is depicted in Figure 1 as a single computing device, it can actually comprise a plurality of computing devices. This flexibility allows the system to be distributed across multiple units, enhancing its computational power and storage capacity. In particular, the computing system Sys1 may comprise more than one processing unit Proc1, and more than one memory Mem1. The one or more processing unit Proc1, and the one or more memory Mem1 may be located in a single computing device, or spread among a plurality of devices. In particular, one of the computing schemes below can be implemented:
- Distributed Computing: The system can be distributed across several computing devices, each equipped with its own processing unit and memory. These devices can be located in different geographical locations, connected via a network to collaborate on executing the methods for watermarking and detection.
- Cluster Computing: The system can be implemented as a cluster of interconnected computers, each contributing processing power and memory resources. This setup is often used in high-performance computing environments to handle large-scale machine learning tasks.
- Cloud Computing: The system can leverage cloud-based resources, where processing units and memories are provided by cloud service providers. This allows for scalable and flexible resource allocation, enabling the system to dynamically adjust to varying computational demands.
- Hybrid Setup: The system can combine local computing devices with cloud resources, optimizing for both performance and cost. Local devices can handle immediate processing needs, while cloud resources can be used for more intensive tasks.
- Edge Computing: In scenarios where data is generated at the edge of the network, such as IoT devices, the system can include edge computing units with local processing and memory capabilities. This reduces latency and bandwidth usage by processing data closer to its source.

It is now referred to figure 2.

Figure 2 represents a method P2 for watermarking a supervised machine learning model according to an embodiment. The method P2 can for example be executed by a computing system such as the computing system Sys1 represented in figure 1.

The method P2 comprises a first step S21 of obtaining a training dataset for the supervised machine learning model Mod1. The training dataset can for example be the training dataset DS1 represented in figure 1.

The method P2 comprises a second step S22 of modifying a subset of the training dataset (wherein the subset is to be construed narrowly, i.e. as a strict subset of the training dataset). Such a subset may be designated as a training subset, and comprises some, but not all, of the training samples of the training dataset.

The size of the training subset may be tailored to allow at the same time an efficient watermarking, without impairing the accuracy of the trained supervised machine learning engine.

For example, the training subset may comprise between 5% and 10% of the training samples of the training dataset.

The modification of the training subset is performed by applying one or more functions to the input features of each training sample that belongs to said training subset.

Stated otherwise, each training sample is modified by the same one or more functions. The function modifies the input features of the training samples, while the label of the training samples are not modified. Thus, the training samples of the training subset can be replaced by modified training samples obtained by applying the one or more functions to the input features, in order to obtain a modified training dataset.

The one or more functions can be referred to as "scrambling function". A scrambling function is a function that alters the structure or appearance of data, so that the modified input features could not be interpreted as the original ones by the supervised machine learning model.

In an embodiment, one of the properties of the one or more functions is that they change the distribution of data. Thus, the distribution of input features of the modified training samples that belong to the training subset is a modification of the distribution of input features of the original training samples.

The process of modifying the training subset can be called *"singularization"* or *"singularization process",* because it renders the modified training samples different from the rest of the training dataset, and the training subset and modified training samples that belong to this training subset can be qualified as "*singularized".*

According to various embodiments, the step S22 can be repeated for a plurality of distinct training subsets of the training dataset, using different functions and/or parameters.

Thus, different watermarks can be performed, for example for a plurality of different owners respectively.

According to various embodiments, one function, or a plurality of successive functions can be applied to the training samples of a training subset.

The one or more functions could be obtained in different ways. For example, they may be predefined by a user. The one or more functions may also be chosen in a set of possible functions. For example, they may be randomly selected in a set of possible functions. Also, certain functions may be parameterized. In addition to the selection of the function, the values of one or more parameters of the functions can be selected. For example, the values of the one or more parameters may be randomly selected in a range of possible values of the parameters.

A random selection of functions and/or random selection of parameters of the functions render a given watermarking unique and makes it more difficult for a third party to notice that the trained model is watermarked.

Different functions may be used.

Certain functions can be applied to any type of input features. For example, the following functions provide examples of scrambling functions that actually modify the distribution of data, and can be applied to any type of input features:
- a permutation of the input features of training samples (for example a permutation of pixels in an image) ;
- an affine transformation ;
- a random vector addition ;
- a frequency transformation.

Other types of functions apply to specific types of data. Using such function allow providing even more efficient modification of the distribution of data, for certain types of input features. For example, the functions listed below provide an effective solution for modifying the distribution of input image data, and thus render the watermarking of an image model more accurate:
- a brightness adjustment ;
- a contrast adjustment ;
- a color jitter modification ;
- a Fourier transformation ;
- a rotation.

It is now referred to figure 4.

Figure 4 illustrates an example of original and singularized images according to an embodiment.

Thus, in the example of figure 4, the supervised machine learning engine takes as input an image. The input features of each training sample thus represent an image, for example in the form of light intensity of each pixel of the image.

The figure 4 represent four different singularizations processes of the original images, using respectively four different combinations of functions. In each case, the combination of functions comprises a FFT (Fast Fourier Transform), a phase shift, and a constant addition. However, the parameters of the functions differ between each of the four different singularization processes.

In the figure 4:
- the images Img4.1, Img4.2, Img4.3, Img4.4 and Img4.5 represent 5 images that form respectively 5 input features of training samples of a training dataset ;
- the images Sing41.1, Sing41.2, Sing41.3, Sing41.4 and Sing41.5 represent 5 singularized images obtained by applying respectively to the images Img4.1, Img4.2, Img4.3, Img4.4 and Img4.5 a first singularization procedure consisting in applying a FFT, a phase shift and a constant addition with a first set of parameters ;
- the images Sing42.1, Sing42.2, Sing42.3, Sing42.4 and Sing42.5 represent 5 singularized images obtained by applying respectively to the images Img4.1, Img4.2, Img4.3, Img4.4 and Img4.5 a second singularization procedure consisting in applying a FFT, a phase shift and a constant addition with a second set of parameters ;
- the images Sing43.1, Sing43.2, Sing43.3, Sing43.4 and Sing43.5 represent 5 singularized images obtained by applying respectively to the images Img4.1, Img4.2, Img4.3, Img4.4 and Img4.5 a third singularization procedure consisting in applying a FFT, a phase shift and a constant addition with a third set of parameters ;
- the images Sing44.1, Sing44.2, Sing44.3, Sing44.4 and Sing44.5 represent 5 singularized images obtained by applying respectively to the images Img4.1, Img4.2, Img4.3, Img4.4 and Img4.5 a fourth singularization procedure consisting in applying a FFT, a phase shift and a constant addition with a fourth set of parameters.

Thus, in the example of figure 4, at step S22, if the images Img4.1, Img4.2, Img4.3, Img4.4 and Img4.5 belong to the training subset of the training dataset to modify, they can be replaced in the training samples, depending upon the singularization procedure (e.g set of one or more functions and associated parameters), by :
- the images Sing41.1, Sing41.2, Sing41.3, Sing41.4 and Sing41.5 ;
- the images Sing42.1, Sing42.2, Sing42.3, Sing42.4 and Sing42.5 ;
- the images Sing43.1, Sing43.2, Sing43.3, Sing43.4 and Sing43.5 ;
- the images Sing44.1, Sing44.2, Sing44.3, Sing44.4 and Sing44.5.

The examples of figure 4 show that the one or more functions used at step S22 render the images (and more generally input features) not understandable as such by the supervised machine learning model. However, the different combinations of functions and parameters modify the distribution of input data, so that different watermarking can be achieved.

It is now referred to figure 5.

Figure 5 illustrates an example of singularized images associated to labels according to an embodiment

As explained above, in the modified training subset of the training dataset, the singularized inputs (for example singularized images) remain associated to the same labels than the original inputs.

The figure 5 represents an example of modification of a training dataset for an image classification model. Each original training sample is formed of an original image associated with a label that represents an index of a class into which the original image must be classified. The training subset to modify of the training dataset is formed of 6 original images, respectively associated to the labels 1, 5, 6, 0, 4 and 8. In this example, the original images are transformed into singularization images using a DCT transform followed by a constant addition.

The figure 5 represents 6 singularized images Sing5.1, Sing5.2, Sing5.3, Sing5.4, Sing5.5, and Sing5.6 obtained at the output of the application of the one or more function.

The modified training subset is thus formed by the following 6 modified training samples, a training sample being represented by a tuple {*name of the image, index of image class*}:

```
        { {Sing5.1, 1} ;
                {Sing5.2, 5} ;
                {Sing5.3, 6} ;
                {Sing5.4, 0} ;
                {Sing5.5, 4} ;
                {Sing5.6, 8} }
```

It is now referred back to figure 2.

The method P2 then comprises, after the training dataset has been modified at step S22, a step S23 of training the supervised machine learning model Mod1 using the modified training dataset.

During this training phase, the model learns to predict labels from the input features, including those in the modified training subset.

The training phase can be performed in different ways.

The training can be implemented using any known method depending upon the types of supervised machine learning model. For example, if the supervised machine learning model is a neural network, a plurality of iterations of gradient descent can be applied to minimize a loss function with respect to the labels of the training dataset.

At the output of step S23, the supervised machine learning model Mod1 is thus trained to perform its intended task (for example image classification), while being watermarked thanks to the use of the modified training subset. The watermarking method P2 provides several advantages.

First of all, as the distribution of input features of the modified training subset is well decorrelated from the rest of training set, the trained supervised machine learning engine performs well both on the original distribution of input data, and the modified distribution of input data. Thus, the trained supervised machine learning model provides both accurate results on the original distribution of input data (thereby allowing it to serve its original purpose accurately), and on the modified distribution of input data (thereby allowing detecting watermarked supervised machine learning engine, the other ones performing poorly on such modified distribution).

Additionally, as the method is not based on adversarial samples, it does not interfere with adversarial protection methods that can still be used to protect the trained supervised machine learning engine. The method is also simple to implement and does not require additional processing such as fine-tuning.

It is now referred to figure 3.

Figure 3 represents a method for detecting a watermarked supervised machine learning model according to an embodiment.

The method P3 is designed to identify whether a supervised machine learning model, such as the supervised machine learning Mod1 has been watermarked.

The method P3 begins with step S31, which involves obtaining a test dataset comprising test samples. These test samples result from the application, to the input features of test samples, of the same one or more functions, associated when applicable to the same parameters, as the one or more functions applied at the step S22 of the method P2.

Stated otherwise, the test samples of the test dataset result from applying the same singularization procedure than the one used for obtaining the training subset of the training dataset at step S22 of method P2.

Therefore, the data distribution of the input features of test samples in the test dataset follows the same distribution than the training subset of the training dataset.

The test dataset can be obtained in different ways.

For example, some or all of the test samples of the test dataset can belong to the training subset of the training dataset used by the method P2.

Stated otherwise, the test of the watermarking is performed on the same singularized samples that have been used during the training for watermarking the supervised machine learning engines. Using such samples is expected to provide an optimal distinction between watermarked and non-watermarked neural networks, as the watermarked neural networks should perform very well on training samples.

The test dataset can also comprise, in addition or instead samples from the training subset of the training dataset, test samples obtained by applying said one or more functions to the input features of original test samples that do not belong to this training subset of the training dataset.

Stated otherwise, original test samples that do not belong to the training subset of said training dataset, but are of the same nature, are singularized in the same way, by applying the same one or more functions. The distribution of data of the test samples thus obtained will thus be similar to the distribution of data in the training subset of the training dataset.

Such test samples are thus also expected to provide a clear distinction between watermarked and non-watermarked supervised machine learning engines. Meanwhile, test samples can be obtained even if the training subset of the training dataset is not available during the test phase, for example for privacy reasons.

The method P3 then comprises a step S32, the supervised machine learning model undergoes testing using the test dataset obtained at step S31. This testing phase involves providing the supervised machine learning model with the test samples of the test dataset and observing the model's output. The output of the test can for example be a metric that indicates if the model performed well or poorly on the test dataset. Non limitative examples of such metrics comprise for example accuracy, precision, sensitivity, recall or F1 score.

The performance of the model on these samples indicates whether the model has been watermarked. A watermarked model is anticipated to perform effectively on the test dataset obtained at step S31, as the model has been trained to recognize the altered distribution of input features resulting from the application of the one or more functions.

On the contrary, a non-watermarked model, that has not been trained using training samples belonging to the altered distribution of data resulting from the singularization process, will perform poorly on the test sample.

The method P3 then comprises a step S33, which consists in determining whether the supervised machine learning model Mod1 has been watermarked based upon the output of the testing S32. The step S33 thus consists in determining, based upon the output of the testing, if the supervised machine learning model performed well on the test dataset (which indicates that the model is watermarked), or perform poorly on the test dataset (which indicates that the model is not watermarked).

This determination can be made by analyzing a metric relying on the output obtained from the step S32 of testing (or more generally any metric or derivative of a metric used in the step S32 of testing) and comparing it to a threshold to determine if the model performed well or poorly.

For example, the supervised machine learning model can be detected as watermarked if at least one of the following criteria applies, among others
- an accuracy computed at step S32 is higher than a predefined threshold (for instance 0.3, 0.8 or 0.9, depending on the type of trained neural network and/or the type of dataset) ;
- a precision computed at step S32 is higher than a predefined threshold ;
- a sensitivity computed at step S32 is higher than a predefined threshold ;
- a recall computed at step S32 is higher than a predefined threshold ;
- a F1 score computed at step S32 is higher than a predefined threshold.
a sensitivity, recall or F1 score computed at step S32 is higher than a predefined threshold. The method P3 is thus able to accurately determine if a supervised machine learning model is watermarked. Furthermore, the method P3 is a lightweight and easy to implement method.

### Experimental results

This section presents some experiments that have been performed to validate the watermarking method and demonstrate how an accuracy threshold can be chosen to separate watermarked from non-watermarked supervised machine learning models during the test method.

In the first experiment, a small neural network was trained to classify the MNIST digits dataset (grayscale images with 10 possible labels). Two trainings were conducted to obtain:
- An original model trained on the original dataset ;
- A watermarked model, trained on the singularized dataset using the method P2, wherein permutations were used as scrambling functions (i.e. pixels in each image from a subset of the original dataset were permutated, with the same permutation which acts as a secrete key to compute the watermark).

Then, the accuracy of the original and watermarked model were calculated, on one hand on the original test dataset (without application of the one or more functions), and on the other hand on a singularized test dataset, through the method P3. The following accuracy results were obtained:
- Original Model on Original Test Dataset: 0.9155
- Original Model on Singularized Test Dataset: 0.1161
- Watermarked Model on Original Test Dataset: 0.9138
- Watermarked Model on Singularized Test Dataset: 0.8452

The original model (without watermarking) achieves an accuracy of 0.91. The watermarked model also achieves the same accuracy, indicating that our procedure does not affect the network's accuracy. However, the original model performs no better than random guessing on the singularized test dataset (0.11). In contrast, the watermarked model performs well on the singularized dataset (0.84). This proves that only the owner with the one or more functions can verify the watermark by producing the singularized test dataset. Here, the accuracy threshold to separate watermarked from non-watermarked networks can be for example set to 0.8.

This example demonstrates that the watermarking method provides clear distinction between watermarked and non-watermarked models, without impairing the accuracy of the models.

In another experiment, the CIFAR10 dataset (RGB images with 10 possible labels) was classified using a convolutional neural network, with a similar methodology, except that rotations were used as scrambling functions (i.e. each 3x32x32 image, of a subset of the original dataset, is first transformed into a 3072 vector, which is then rotated, using the same rotation for all the images in this subset). The following results were obtained:
- Original Model on Original Test Dataset: 0.6965
- Original Model on Singularized Test Dataset: 0.1153
- Watermarked Model on Original Test Dataset: 0.6982
- Watermarked Model on Singularized Test Dataset: 0.3867

Here, the accuracy threshold to separate watermarked from non-watermarked networks can be set to 0.3 since the watermarked model achieves an accuracy of 0.38 on the singularized test dataset, while the original model does not perform better than random guessing.

In the last experiment, a shallow neural network was used to classify malicious traffic from the NSL-KDD dataset (38 input features with 2 possible labels). These results also confirm the preceding ones, the accuracy results being:
- Original Model on Original Test Dataset: 0.9824
- Original Model on Singularized Test Dataset: 0.5207
- Watermarked Model on Original Test Dataset: 0.9680
- Watermarked Model on Singularized Test Dataset: 0.9459

Here, the accuracy threshold can be 0.9 since the watermarked network managed to classify the singularized dataset with a 0.94 accuracy.

This disclosure is not limited to the method, computing system and computer program, which are only examples. The invention encompasses every alternative that a person skilled in the art would envisage when reading this text.

## Claims

1. A computer-implemented method (P2) for watermarking a supervised machine learning model (Mod1), said method comprising:
- obtaining (S21) a training dataset of said supervised machine learning model ;
- modifying (S22) a subset of said training dataset by applying one or more functions to the input features of each training sample that belongs to said subset ;
- training (S23) said supervised machine learning model using said modified training data set.

2. The computer-implemented method of claim 1, wherein said subset comprises between 5% and 10% of the training samples of the training dataset.

3. A computer-implemented method (P3) for detecting a supervised machine learning model watermarked by a computer-implemented method according to any one of the preceding claims, said method comprising:
- obtaining (S31) a test dataset comprising test samples obtained by applying said one or more functions to the input features of original test samples ;
- testing (S32) said supervised machine learning model over said test dataset ;
- determining (S33) that the supervised machine learning model is watermarked based upon the output of said testing.

4. The method of claim 3, wherein said test dataset comprises test samples belonging to said subset of said training dataset.

5. The method of claim 3, wherein said test dataset comprises test samples obtained by applying said one or more functions to the input features of original test samples that do not belong to said subset of said training dataset.

6. The method of any of the preceding claims, wherein said one or more functions are scrambling functions.

7. The method of any of the preceding claims, wherein said one or more functions consist in functions randomly selected in a set of possible functions.

8. The method of any of the preceding claims, wherein said one or more functions comprise one or more of:
- a permutation of said input features ;
- an affine transformation ;
- a random vector addition ;
- a frequency transformation.

9. The method of any of the preceding claims, wherein said supervised machine learning model takes as input images said one or more functions comprise one or more of:
- a brightness adjustment ;
- a contrast adjustment ;
- a color jitter modification ;
- a Fourier transformation ;
- a rotation.

10. The method according to any of the preceding claims, wherein said supervised machine learning model comprises a neural network.

11. The method according to any of the preceding claims, wherein said supervised machine learning model is a classifier.

12. The method according to any of the preceding, wherein said supervised machine learning model is an image classifier.

13. Computing system (Sys1) comprising one or more processing unit (Proc1) configured to execute a method according to one of claims 1 to 12.

14. Computer software comprising instructions to implement at least a part of a method according to one of claims 1 to 12 when the software is executed by a processor.

15. Computer-readable non-transient recording medium on which a software is registered to implement a method according to one of claims 1 to 12 when the software is executed by a processor.
